# EUROPEAN PATENT APPLICATION

(11) **EP 1 457 398 A2**
(43) Date of publication of application: **15.09.2004**
(21) Application number: 04380055.6
(22) Date of filing: 12.03.2004
(51) Int. Cl.: B60S 1/34

(54) **Vehicle windshield wiper system with alternate side to side evolution, with a single and foldable windshield wiper blade that provides a maximized cleaning surface**

(30) Priority: 13.03.2003 ES 200300600
(71) Applicant: Puebla Sánchez, Gonzalo, 28027 Madrid (ES)
(72) Inventor: Puebla Sánchez, Gonzalo, 28027 Madrid (ES)

(57) **Abstract**

This windshield wiper increases the visibility of the driver of any vehicle to the whole useful surface of the windshield in order to improve the driving and road safety. It consists of a single windshield wiper blade (1) which stays in a vertical plane and it is connected to one end of an arm, being the other end connected, by means of a shaft, to a rigid metal structure or train (2), which slides from side to side of the vehicle along a rail (3). This rail is under the vehicle hood, it follows the curvature of the windshield and allows the train to slide on bearings. When it moves from side to side it pulls from the windshield wiper blade and arm performing complete sweeps of the windshield surface. An electrical motor folds the windshield wiper blade and arm under the vehicle hood or unfolds both them over the windshield when it is needed. A lineal motor moves the whole unit under the control of an electronic circuit.

## Description

### FIELD OF INVENTION

This present invention falls under the transportation sector, especially under the railway, nautical and aeronautical sectors, and more specifically under the car sector and industry.

### DESCRIPTION OF THE PRIOR ART

1.- About the different types of windshield wipers: Nowadays most of the conventional vehicle windshield wiper systems are made up of two windshield wiper blades supported by two arms. These arms rotate around their own shafts located under the vehicle hood, or between the windshield and the hood. The windshield wiper blades, located on the other end of the arms, sweep the almost rectangular surface of the windshield by means of a to-and-fro movement, rotating around each shaft and making the swept area of each blade to overlap, providing a not very optimized cleaning area on the windshield.

These mechanical details of the windshield wipers did not change in a lot of years, even though it has evolved under the point of view of the quality of the materials and the continuous increase of the windshield surface swept by the blades.

Some vehicle models have a single windshield wiper blade mounted on a single arm that rotates around a shaft located on the center of the vehicle, just in front of the windshield; the surface swept by this windshield wiper blade is symmetrical but it is also scarce.

There are other windshield wiper models that use a single windshield wiper blade mounted on a single arm, being this arm an extendable one. The shaft of this arm is also located on the center of the vehicle, just in front of the windshield; when the arm performs the to-and-fro movement it increases or decreases its length in certain angles performing in this way a more efficient cleaning on the top-left and top-right areas of the windshield; the surface swept by this windshield wiper blade is symmetrical and more efficient than the system already described in the previous paragraph.

There are another windshield wiper systems that use a single windshield wiper blade mounted on a double arm with two shafts which are very close together, so that the windshield wiper blade traces a certain curve, other than a circumference, that allows an efficient cleaning on the left area of the windshield, just in front of the driver position; however the surface swept on the right side of the windshield is quite scarce.

There are other windshield wiper models with two blades, in which the left blade is mounted on a double arm with two shafts which are very close together, so that the windshield wiper blade traces a certain curve, other than a circumference, that allows an efficient cleaning of the left area of the windshield, just in front of the driver position; the fact of having also a right windshield wiper blade makes the total cleaning surface to be bigger than in the model described in the previous paragraph.

Finally, there are other windshield wiper systems with two or three windshield wiper blades in which each blade cleans a portion of the surface of the windshield scarcely overlapping with other blade; these windshield wiper systems are usually installed in big size vehicles. In this case each windshield wiper blade is mounted on one end of a double arm; this double arm rotate around two shafts located at the other end and they are very close together one to each other. In this way the windshield wiper blades are kept in vertical position while tracing a curve and sweeping a surface that fits well to both the left and right sides of the windshield, although there are big areas on the top and bottom of the windshield that are not cleaned.

In general windshield surface swept by one, two or three blades moving in a circumference shape is hardly adapting properly to the almost rectangular surface of the windshields. This has lead in many cases to a not very efficient cleaning, resulting in a significant reduction of the visibility and, therefore, a reduction of the road and driving safety.

Therefore all these windshield wiper systems have the inconvenience that they are not fully cleaning the vision field of the driver, it is to say, the working or useful surface of the windshield.

2.- About the standby effects: In many models of vehicles, except for some of the newer ones, when the windshield wipers are not in use they are usually in more or less degree in front of the vision field of the driver, reducing his visibility, or at least, making the driving more uncomfortable.

Also, when the windshield wiper is not in use, the fact that the windshield wiper blades and its arms stay within sight on the lower area of the windshield creates extra secondary problems as the following ones: 1.- Whistling and other noises produced by the front wind passing between the blades and arms when the vehicle moves at high speed; 2.- Interference of the windshield wiper blades and arms with the aerodynamic shape of the bodywork of the vehicle, producing therefore superfluous turbulences and an extra aerodynamic braking to the vehicle; 3.-Unattractive visual effect of the windshield wiper blades and arms being permanently within sight; 4.- Interference of the windshield wiper blades and arms with the rotating brushes of the automatic car washing machines; 5.- Ease to steal or damage the windshield wiper blades and arms being so accessible; 6.- Fast wear out of the rubber portion of the windshield wiper blades due to the extended exposure to sun and cold.

A big portion of the present windshield wipers has these inconveniences in more or less degree.

3.- About the efficiency of the sweeping: In many vehicle models the areas of the windshield that are not swept by the blades accumulate rain water and dirt and loose their transparency, reducing and deteriorating the driver visibility; in addition, in many cases, when the vehicle moves at high speed the rain water, that has already been swept down to the bottom portion of the windshield, comes up again to the clean area pushed by the front wind, so that it has to be swept down again and again. In this way, if the raining and speed conditions are kept a pond of water can be seen in the middle-lower portion of the windshield; this pond of water is continuously moving up and down reducing the driver visibility, lowering the efficiency of the windshield wiper sweeps and producing dangerous distractions in the driver.

On the other hand, when the vehicle moves at low speed the drops of water accumulated on the higher portion of the windshield, which is not swept by the blades, creates small streams of water that often go down through the clean portion of the windshield, not only when it is raining, but when it has stopped raining.

These two facts, the pond of water continuously moving up and down and the small streams of water going down through the clean area of the windshield, are contributing in more or less degree to deteriorate the driver visibility, not only because of the reduction of the useful area of the windshield but because of the reduction of his attention in the driving.

4.- About the ailerons: There are presently a big amount of vehicle models that need to carry an aileron in one or more of the windshield wiper blades; this is because the strength of the front wind, when the vehicle moves at high speed, force the windshield wiper blades to loose contact with the windshield and therefore reduces the cleaning efficiency. The ailerons are useful to keep the windshield wiper blades in continuous contact with the windshield and also to keep aerodynamic shape of the vehicle.

This extra component, which is the aileron, is artificially thickening the windshield wiper blades and, in fact, is also contributing to reduce the effective visibility of the driver.

5.- About the motor: In general the oscillating movement of windshield wiper blades and arms in all the vehicles is coming from a direct current motor, in which the turning force of the shaft is turned into a to-and-fro movement by means of gears, levers and transmission arms.

### EXPLANATION OF THE INVENTION

The present invention is referring to a new type of windshield wiper made up of a single and foldable windshield wiper blade, which sweeps the windshield in a lineal movement from side to side of the vehicle, and it is moved by a lineal motor whose moving portion slides on bearings along a rail. Said windshield wiper is specifically designed to increase the road and driving safety by means of an optimization of the driver visibility in both rainy and dry driving conditions.

In rainy driving conditions increasing the driver visibility is achieved by performing a sweep that covers all the useful surface of the windshield so that the totality of the rain water is removed from such area. Therefore the areas of the windshield with decreased transparency are not existing any more.

In dry driving conditions increasing the driver visibility is achieved by itself; this is because the single windshield wiper blade has swept all the useful surface of the windshield, and therefore there will never be dirt accumulated on it as it has been previously swept out all together with the rain water. In this way there will never be decreased transparency on any area ofthe windshield.

This new windshield wiper system resolves simultaneously all the inconveniences already mentioned in the section "Description of the Prior Art" and contributes to improve many other functionality details of the conventional windshield wipers, as it is described in the following paragraphs.

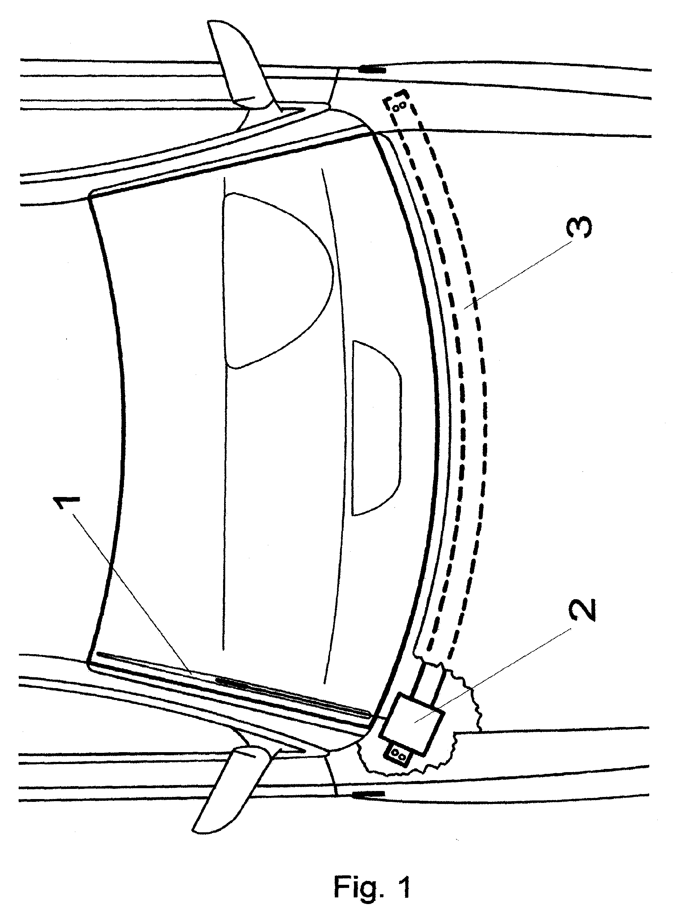

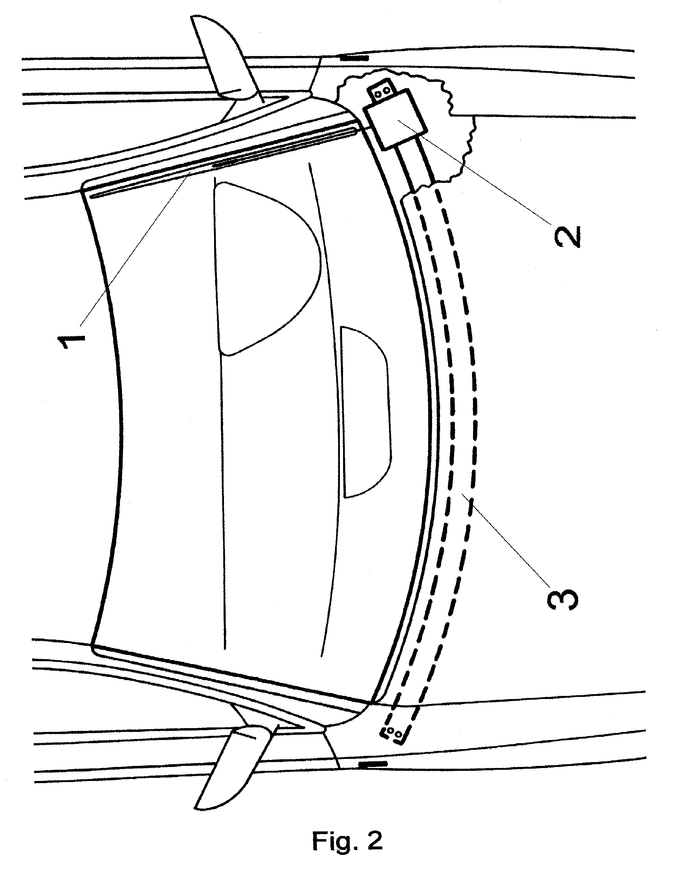

First, this present invention has focused on obtaining a cleaning of 100 percent of the useful surface of the windshield. This is achieved by means of using a single windshield wiper blade that is continuously kept in a vertical plane and moves in a lineal, alternating and horizontal movement from side to side of the windshield. The length of the windshield wiper blade is almost identical to the height of the windshield; in this way each sweep performed by the windshield wiper eliminates all the water and all the dirt from the windshield, therefore increasing the visibility to the whole useful surface of the windshield under any weather condition in which the vehicle is driven. It is seen in Figure 1 that the windshield wiper blade (1) is on the right side of the windshield because it has been moved by the train (2) along the rail (3). It is seen in Figure 2 that the windshield wiper blade (1) has been moved by the train (2) along the rail (3) to the left side of the windshield and therefore in this movement it has swept all the useful surface of the Windshield. These sweeps from side to side of the vehicle are being repeated at an adjustable speed and frequency by using the windshield wiper switch at the driver position.

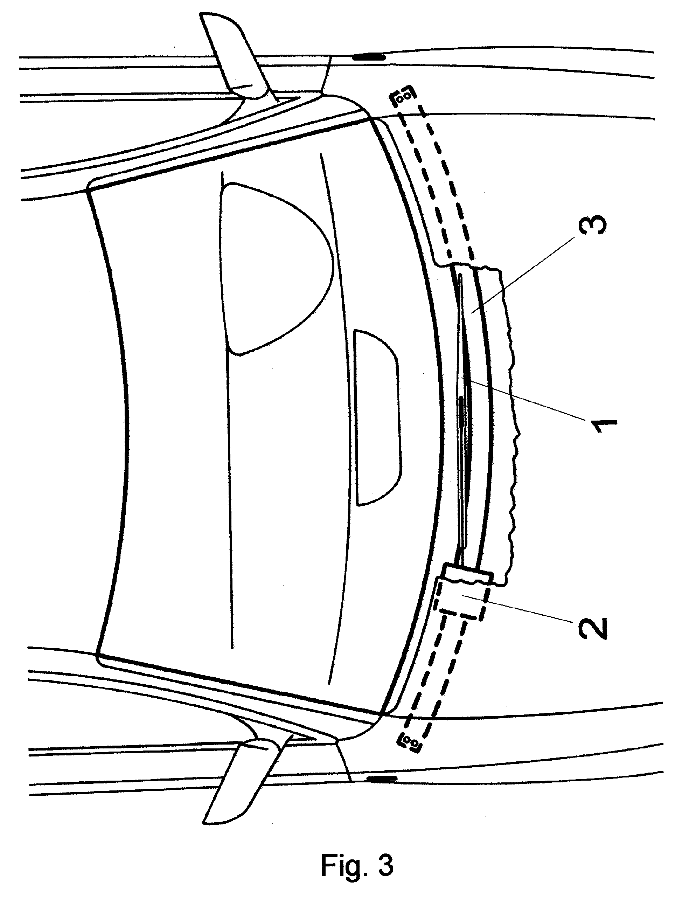

Second, this present invention has focused on achieving a windshield wiper blade and arm that folds and hides under the vehicle hood. It is seen in Figure 3 the windshield wiper blade and arm in the folding position and already concealed under the hood. In this way when the windshield wiper is not in use it disappears from the sight. This new feature, apparently very simple, provides important advantages, as the following ones: 1.- Improvement of the visibility in dry weather conditions due to the fact of not having the windshield wiper blade and arm in the vision field. 2.-Elimination of the whistling and other noises produced by the front wind passing between the windshield wiper blade and arm; 3.- Elimination of the interference of the windshield wiper blade and arm with the rotating brushes of the automatic car washing machines; 4.- Optimization of the aerodynamic shape of the bodywork of the vehicle; 5.- Elimination of the possibility of having the windshield wiper blade or arm being stolen or damaged as they are concealed under the hood; 6.- Improvement of the aesthetic effect of the windshield wiper blades and arms not being within sight; 7.- Protection for the rubber portion of the windshield wiper blade due to minimized exposures to sun and cold.

Third, this invention has achieved that the water swept by the windshield wiper blade is emptied only along the left and right sides of the windshield. In this way, when the vehicle moves at low speed, the water swept by the blade will go by gravity to the lower-left or lower-right part of the windshield and, from there, to the lower part of the vehicle and to the ground. However, when the vehicle moves at high speed and, due to the front wind, the already swept water will be dragged away along the top of the vehicle roof to the back-left and back-right sides of the vehicle, and, from there, to the lower part of the vehicle and to the ground. In both cases the cleaning of the windshield is highly efficient because the already swept water is never coming back to the clean area of the windshield and, in addition, there are no areas of the windshield where its transparency could be reduced due to cumulated water or dirt.

Fourth, this present invention has avoided the installation of any type of aileron on the windshield wiper blade. This is because the windshield wiper blade sweeps the windshield in a lineal way, it stays every time in a vertical plane and therefore it remains parallel to the flow lines of the front wind. As a result of this, the outline of the windshield wiper blade and arm facing the front wind is minimum and constant, the blade and arm never loose contact with the windshield and, therefore, it does not need aileron any more.

In addition, due to the fact of being the windshield wiper blade and arm parallel to the flow lines of the front wind, the windshield wiper blade and arm hardly interfere with the aerodynamics of the vehicle, they have a uniform operation and they are not subject to aerodynamic changing conditions.

Fifth, this present invention has simplified the mechanics of the windshield wiper system by means of powering the system with a lineal motor that do not require additional mechanics like shafts, gears, levers or transmission arms, and is able to move the windshield wiper blade and arm, in alternate fashion, from side to side of the vehicle without any rubbing or wear out.

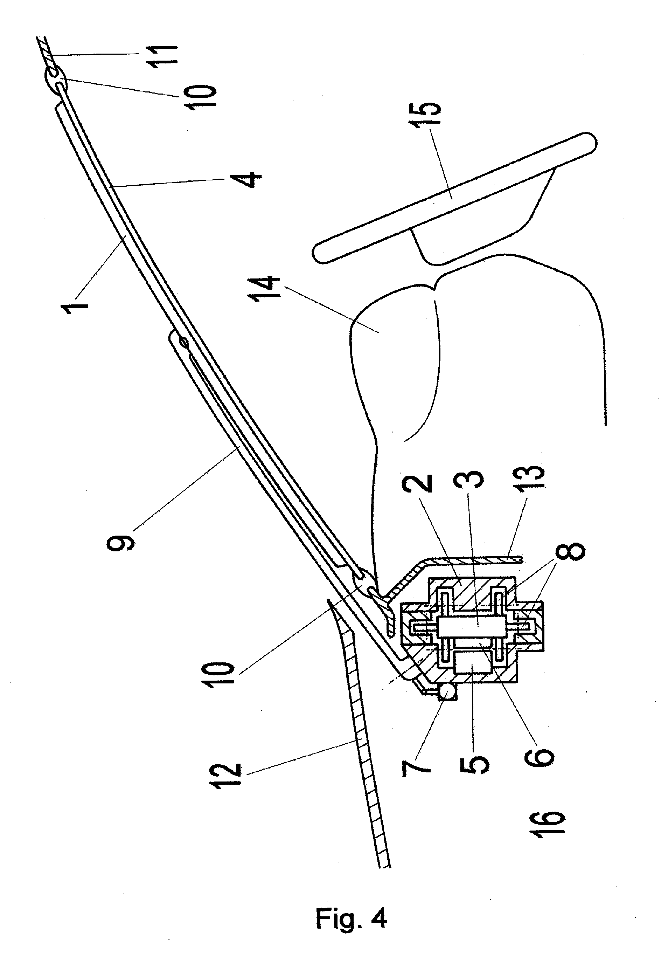

In Figure 4 it can be seen that the coils (5), or moving portion of the lineal motor, are located in the rigid metal structure named train (2); the magnets (6), or fixed portion of the lineal motor, are allocated on the rail (3). The rigid metal structure (2), or train, slides along the rail on needle bearings (8) with almost no friction at all in its side to side movement, except for the unavoidable and necessary rubbing between the windshield wiper blade (1) and the windshield (4) itself, which is essential for a correct cleaning.

### DETAILED EXPLANATION OF THE INVENTION

In Figure 4 it can be seen a portion of a simplified longitudinal cut of any vehicle with the driving position, the windshield (4), a portion of the hood (12) and the location of the mechanics of the new windshield wiper assembly; in this figure it can also be seen the dashboard with the instruments panel (14) and the steering wheel (15).

In Figure 4 it can also be seen that the rigid metal structure, or train (2), which is the heart of this new system, is made up of four pieces that are connected together with screws so that it is mounted on the rail (3) surrounding it. The train is supported by the rail with the help of twelve needle bearings (8), six of which can be seen in this figure 4.

The windshield wiper blade (1) is connected to one end of the arm (9) by means of a tilting connection that allows the blade to automatically adjust its vertical angle to the small variations that could be found when moving across the windshield (4). The lower end of the arm (9) is connected to the train (2) by means of a shaft with a mechanical lock, and powered by an electrical motor (7). Said shaft allows both the blade and arm to turn together 90 degrees so that both fold down under the hood (12) of the vehicle when such motor (7) is activated in one direction; it also allows both the blade and arm to turn together 90 degrees in the opposite direction so that both unfold up on the windshield when the electrical motor (7) is activated in the opposite direction. In this last position the windshield wiper blade is in the ready position to start sweeping the windshield, starting always with the area in front of the driver. The mechanical lock, connected to the shaft in the low end of the arm, locks the arm and therefore the blade in the unfolded position, preventing both to change their unfolding angle with respect to the rail while they are sweeping the windshield, and preventing the to-and-fro effort to damage the electrical motor (7). In addition, the rail (3) should be stiff enough to hold the twisting effort of the arm (9) and blade (1) on the windshield (4).

The windshield wiper blade (1) of this new windshield wiper system is not so different to the conventional ones, except for its length, that should be adapted to the height of the windshield of each of the vehicle models.

The train (2), already mentioned in the previous paragraphs, is mechanically holding the arm/blade set. This train slides along the rail (3) with almost no friction and no mechanical play. The rail (3) is arc shaped, it is following the curvature of the windshield (4) and has rigid connections on both ends to the vehicle chassis (13). The rail (3) keeps the train (2) at a constant distance to the windshield (4), as it is describing a concentric arc with the curvature of the windshield. While the train is sliding along the rail it pulls the windshield wiper blade and arm together producing a very efficient sweep on the windshield, as it is cleaning its whole useful surface.

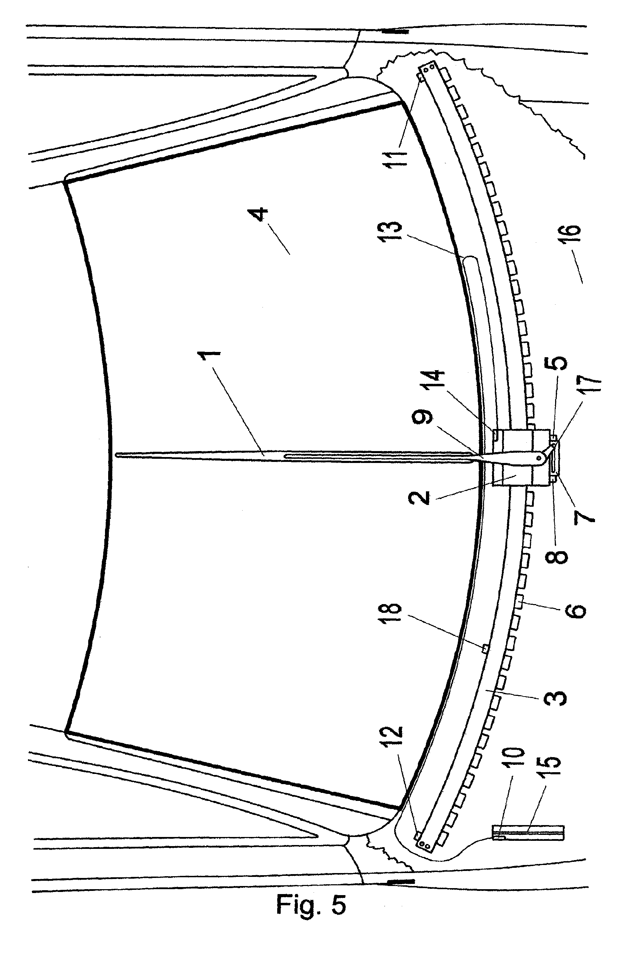

The alternate movement from side to side of the vehicle is achieved with a lineal motor. It can be seen in Figure 5 that the magnets (6), or fixed portion of the lineal motor, are evenly spaced along the rail (3). The electrical signals that the lineal motor need to work are coming from a printed circuit board, which has adequate protection against wet or impact, and consists on a standard electronic controller for lineal motors. This controller card (15) is located inside the vehicle hood (16).

There are five position sensors whose solely function is to detect the right positioning of the train and arm when they are working. The five sensors are under the control of the standard controller card; these sensors are the following ones and are located in the following places:
- "left limit" sensor (11), located at the left end of the rail.
- "right limit" sensor (12), located at the right end of the rail.
- "ready to fold" sensor (18), located at a middle-right area ofthe rail.
- "unfolded arm" sensor (5), located close to the shaft of the arm.
- "folded arm" sensor (8), located close to the shaft ofthe arm.

The electrical signals needed by the lineal motor and the sensors are transmitted from the controller card by means of a high flexibility ribbon cable (13), similar to the ribbon cable used to power the printing head in the ink jet printers. This high flexibility ribbon cable allows continuous to-and-fro movements of the train while providing the corresponding electrical signals to the motor and sensors.

The electrical power for the controller card and linear motor comes from the direct current available in all the vehicles. All the signals like start, stop, speed selection, frequency selection, fold arm, unfold arm and start windshield washer are coming from the corresponding switch located at the driving position, and they are going to the controller card which will execute the corresponding action according to the signal that has been received.

The windshield washer system is a dual one; on one hand it consists on two small sprinklers located on the vehicle hood that will spray water with detergent on the windshield when the switch is activated; on the other hand it consists on a set of holes with the appropriate orientation and located on a rigid tube installed on the windshield wiper arm, so that they spray water with detergent while the windshield wiper sweeps from side to side.

### DESCRIPTION OF THE DRAWINGS

Figure 1 is a top view of the windshield area of any vehicle. In this figure the windshield wiper blade (1) is located on the right side of the windshield. The windshield wiper arm, that holds the windshield wiper blade, goes from underneath the hood up to the windshield. The rigid metal structure (2), or train, has already moved the windshield wiper arm and blade up to the right side of the windshield sweeping entirely the useful surface of the windshield. The rail (3) holds the train (2) and the windshield wiper blade (1) allowing them to slide along its curved shape, which is concentric to the windshield curve.
Figure 2 is a top view of the same area of the windshield. In this case the windshield wiper blade (1) is located on the left side of the windshield because the train (2) has moved the windshield wiper blade and arm along the rail (3) up to the left side of the windshield sweeping one more time the entire useful surface of the windshield.
Figure 3 is again a top view of the windshield, but with a small difference: the windshield wiper arm and blade (1) are folded down underneath the hood, so that the entire windshield wiper is protected and in a safe place. In order to reach this position the train (2) should have activated the "ready to fold" sensor (18) that can be seen in Figure 5, and whose location has already been described in the chapter Detailed Explanation of the Invention.
Figure 4 shows a simplified longitudinal section of the driving position of any vehicle, so that all the mechanics of the new windshield wiper can be physically located in relationship with the vehicle itself The windshield (4) is held by the rubber bands (10) to the roof (11) of the vehicle on the top, and to the chassis (13) on the bottom. The windshield wiper blade (1) is connected to the sliding train (2) with the help of the arm (9). The connection between the arm and train is articulated, so that it allows both the windshield wiper blade and arm to turn 90 degrees together in order to fold down under the vehicle hood (12), or to turn 90 degrees back in the opposite direction so it unfolds back over the windshield (4) surface. These rotations to fold and unfold are driven by the motor (7) that has a mechanic lock. The train slides along the rail (3) with no friction due to twelve needle bearings (8). The train is moved thanks to the lineal motor, which is made up of the moving portion or coils (5), connected to the train (2), and the fixed portion or magnets (6), connected to the rail (3).
Figure 5 is a top view of the windshield area of any vehicle. In this figure it can be seen that the rail (3) holds several parts in place: the sliding train (2), the magnets (6) or fixed portion of the linear motor, the "left limit" (11) sensor, the "right limit" (12) sensor and the "ready to fold" (18) sensor. In this figure it can also be seen that the sliding train (2) holds several parts in place: the windshield wiper arm (9), the blade (1), the motor (7) to fold or unfold the arm and blade, the mechanical lock (17), the "folded arm" (8) confirmation sensor, the "unfolded arm" (5) confirmation sensor, the coils or moving portion of the linear motor and the ribbon cable connector (14). In addition, in this figure it can be seen the high flexibility ribbon cable (13), the controller card (15) and the connector (10) of the ribbon cable to the controller card.

All these parts are located inside the hood (16) of the vehicle, close to the firewall, where all the usual parts making up the standard windshield wipers are located.

### A WAY TO BUILD THE INVENTION

This new windshield wiper model should be installed in vehicles that are still under design since it requires a small but adequate redistribution of the internal volume ofthe vehicle hood; this makes the installation difficult in an already working vehicle. This is because the mechanics and the way the new windshield wiper works is quite different to the conventional windshield wipers, so trying to install all the new parts would require to redesign the area below the windshield and below the hood, and a relocation of some of the closest components.

The main part of this new windshield wiper system is the rigid metal structure, or train. This structure is box shaped, is made up of four pieces of anodized aluminum and contains the most important parts of this new windshield wiper; these parts are the following ones:
1.- Twelve needle bearings that the train need in order to slide on the rail.
2.- Coils and iron for the two phases motor corresponding to the moving portion of the lineal motor.
3.- Electric motor with mechanical lock to fold and unfold both the windshield wiper arm and blade.
4.- Shaft allowing a 90 degrees turn of the arm, so that arm and blade can move from the folded to the unfolded position, or vice versa.
5.- Electrical connections from one end of the high flexibility ribbon cable which carries the electrical signals for the lineal motor, the folding motor and two of the positioning sensors.

The remaining components of the system are the following ones:
1.- Windshield wiper blade with a length slightly shorter than the windshield height.
2.- Windshield wiper arm connected to the sliding train by means of a shaft. This arm has a small extension on its bottom that the folding motor (7) of Figure 5 uses to unfold the arm and blade on the windshield or to fold both of them under the vehicle hood.
3.- Metal rail on which the train slides.
4.- High flexibility ribbon cable carrying electrical signals for motors and sensors.
5.- Printed circuit controller card to control motors and sensors.
6.- Set of permanent magnets fixed to the rail; they are the fixed portion of the lineal motor.
7.- Water tank, water pump and flexible tube to supply liquid to the windshield washer.
8.- Set of windshield wiper switches on the dashboard, close to the steering wheel, and cables to the controller card.

The controller card generates two sinusoidal electrical signals with a 90 degrees phase difference one to each other which is necessary to power the two phases of the lineal motor. The speed of the lineal motor is defined by the frequency of these sinusoidal signals. Therefore the switch to control the speed of the windshield wiper will change the frequency of such signals in the controller card, so that the correct sweeping speed can be selected at any time.

The positioning sensors are directly connected to the controller card and their task is to confirm that the sliding train is in the "ready to fold" position before being able to fold or unfold the windshield wiper arm and blade, and also to confirm that the windshield wiper arm is in the "folded arm" or ''unfolded arm" position.

The "left limit" and "right limit" sensors are also directly connected to the controller card and their task is to stop the sliding train in one end or in the other so that it changes the direction without ever reaching the mechanical limit.

The high flexibility ribbon cable works in a similar way to the ribbon cable that powers the printing heads inside the ink jet printers. The length of this cable is a specific one and it carries the electrical signals to motors and sensors in any place where the sliding train is when it moves along the rail.

## Claims

1. A vehicle windshield wiper system with alternate side to side evolution, with a single and foldable windshield wiper blade that provides a maximum cleaning surface, comprising:
-- a rigid metal structure (2) which is physically holding the moving elements of the windshield wiper, that slides along a rail (3) on bearings in order to move a windshield wiper arm and blade from side to side of a vehicle; in this way the windshield wiper blade (1) perform complete alternating sweeps between left and right ends of the windshield by moving in a horizontal curved line to eliminate the water and dirt from the windshield surface in order to achieve the cleaning of all its useful surface.
-- a windshield wiper blade (1) whose length is scarcely shorter than the height of the windshield and it is held by means of a tilting connection on the high end of a windshield wiper arm; the low end of the windshield wiper arm is connected to the rigid metal structure by means of a shaft that allows a rotation of 90 degrees; in this way the windshield wiper arm and blade can only move to two unique positions with regard to the rigid metal structure: both arm and blade folded under the hood, when the windshield wiper is not in use, and both arm and blade unfolded on the windshield surface, when the windshield wiper is going to be in use.
-- a rail (3) made up of a curved metal bar, whose section is rectangular shaped which is held on both ends to the chassis of a vehicle, and along which the rigid metal structure slides from side to side of the vehicle following the top view curvature of the windshield.
-- a shaft connecting the windshield wiper arm to the rigid metal structure that allows both the windshield wiper arm and blade together to turn 90 degrees in one direction or the other.
-- a lineal motor which has a moving portion, made up of coils and iron and located in the rigid metal structure, and a fixed portion made up of magnets and located on the rail.
-- an electronic control of the operation of the whole windshield wiper system, which is made up of a standard controller card for lineal motors, sensors to control the positioning of the moving parts, interconnection cables, start/stop switch, speed selection switch, frequency selection switch, windshield washer switch and a switch to fold and unfold the windshield wiper arm and blade.
-- a double windshield washer system made up of several sprinklers located over or below the vehicle hood, and also made up of a set of holes, with the appropriate orientation on a rigid tube located on the windshield wiper arm, that sprays water with detergent on the windshield while the windshield wiper perform the sweeps, and which is fed with liquid by a flexible tube coming from a windshield wiper tank.

2. A windshield wiper system according to claim 1 wherein the rigid metal structure, instead of sliding on needle bearings along the rail, it slides on air bearings along the same rail with no mechanical friction. In this case it is necessary to provide the vehicle with a low pressure air pump and a pressure sensor to make the air bearings to work properly.

3. A windshield wiper system according to claim 1 wherein the rigid metal structure is moved by a direct current motor, in which case moving the rigid metal structure would be done by means of a cable, a band, endless screw or worm gear.

4. A windshield wiper system according to claim 1 wherein the windshield wiper blade and arm are not foldable and therefore both are every time visible. In this case the windshield wiper arm and the rigid metal structure are solidly connected together. Requiring the windshield wiper blade and arm to stay every time on the windshield can be justified in the cases of having big size windshields, such as the ones for vans, buses, trucks, train locomotives or boats, in which the front shape of the vehicle or ship does not allow an appropriate technical solution to the folding mechanics.

5. A windshield wiper system according to claim 1 wherein all its mechanical elements (rail, rigid metal structure, lineal motor, etc.) are located at the top of the windshield. In this case the windshield wiper blade and arm are coming from the roof of the vehicle on top of the windshield. This solution is appropriate for big size vehicles, like vans, buses, trucks, train locomotives or ships, in which the shape of the front of the vehicle or ship allows all the elements of this new windshield wiper to be located on the top area of the windshield.

6. A windshield wiper system according to claim 1 and 4 wherein the windshield wiper arm and blade are not foldable and, in addition, the blade has the same shape as the left or right edges of the vehicle windshield, so that when the windshield wiper is not in use the blade becomes part of the edge of the windshield and it is concealed by the bodywork of the vehicle; in this way it never decreases the visibility of the vehicle and it does not interfere in the flow lines of the front wind, neither in standby nor in working conditions.

7. A windshield wiper system according to claim 1 wherein the rail, instead of being a single part by itself, and therefore an added piece to the vehicle, it is part of the structure of the chassis of the vehicle itself This specific variation may easy the fabrication and may simplify the mass-production assembly of this new type of windshield wiper.
